# EUROPEAN PATENT APPLICATION

(11) **EP 2 605 584 A1**
(43) Date of publication of application: **19.06.2013**
(21) Application number: 10855788.5
(22) Date of filing: 13.08.2010
(51) Int. Cl.: H04W 28/26

(54) **METHOD, MOBILE STATION AND MULTI-CARRIER COMMUNICATION SYSTEM FOR TRANSMITTING UPLINK RESPONSE SIGNAL**

(71) Applicant: Fujitsu Limited, Kawasaki-shi, Kanagawa 211-8588 (JP)
(72) Inventor: ZHANG, Yuantao, Beijing 100025 (CN); LAN, Yuanrong, Beijing 100025 (CN); ZHANG, Yi, Beijing 100025 (CN); ZHOU, Hua, Beijing 100025 (CN); WU, Jianming, Beijing 100025 (CN)
(74) Representative: Ward, James Norman
(86) International application number: PCT/CN2010/075992
(87) International publication number: WO 2012/019367

(57) **Abstract**

A method and mobile station for transmitting uplink response signal are provided. A method for transmitting uplink response signal in a multi-carrier communication system is provided, in the multi-carrier communication system, each uplink carrier is associated with a group of downlink carriers, the group of downlink carriers are part of all downlink carriers in the multi-carrier communication system. The method includes distributing uplink control channel resource for each downlink carriers associated with an uplink main carrier in the uplink main carrier; according to a response signal state, selecting uplink control channel resource from the distributed uplink control channel resource for transmitting uplink response signal and selecting modulated symbol mapping; and transmitting the uplink response signal by using the selected uplink control channel resource and the modulated symbol mapping.

## Description

### FIELD OF THE INVENTION

The present invention relates to the field of wireless communication and particularly to transmission of uplink response signal in a multi-carrier communication system.

### BACKGROUND OF THE INVENTION

In a LTE (long term evaluation) communication system, a physical uplink control channel (PUCCH) is used to transmit uplink control information including response signals ACK/NACK/DTX (discontinuous transmission) for downlink data, channel state information (CSI) and etc., wherein ACK represents that the data is received correctly, NACK represents that the data is received in error, DTX represents that no downlink control data is received by UE, that is, no control signaling for scheduling downlink data transmission is received by the UE. The response signals transmitted in the PUCCH correspond to a physical channel resource, a time domain sequence and a frequency domain sequence respectively. The three resources are associated with two parameters. A first parameter is a common parameter N¹ used by all user equipments (UE) in a cell configured by a higher level of the system. Another parameter is associated with index of a first CCE (control channel element) of the physical downlink control channel (PDCCH) in which the downlink data is scheduled by the response signal. In particular, N¹ determines an initial position of the PUCCH for transmitting the response signals in the uplink sub frame in the frequency domain, and is shared by all UEs or mobile stations in the cell. A combination of the index of the first CCE of the PDCCH and the initial position determines the physical resources and sequence resources adopted actually by the UE, which is scheduled in the PDCCH, in transmitting uplink control signaling.

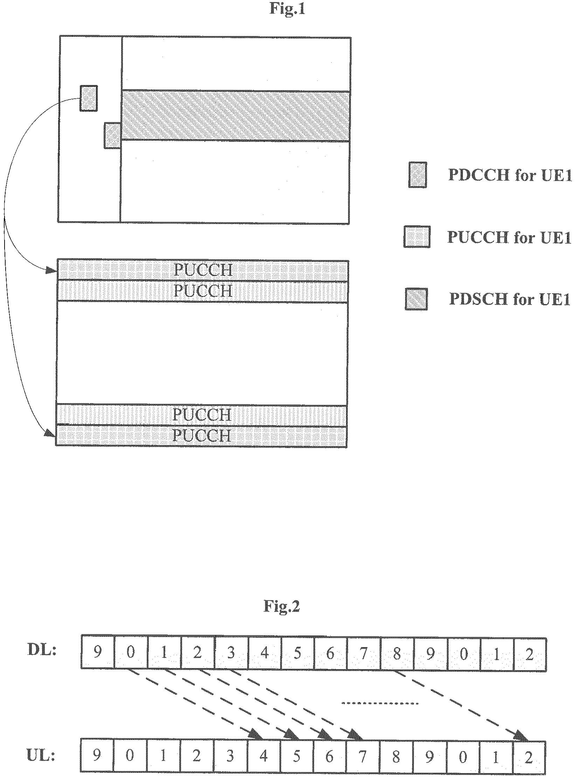

Fig. 2 is a schematic view of timing of transmitting response signals in the LTE FDD (Frequency Division Duplexing) system. In LTE FDD system, there is one to one correspondence between the uplink sub frames and the downlink sub frames. That is, for any one of the UEs in the system, one uplink sub frame only transmits a value of response signal of the downlink sub frame data corresponding to the uplink sub frame. The data transmitted in one downlink sub frame may include two transport blocks (TB) at most, i.e., response signals of two bits. The signals of two bits need to be modulated into QPSK (QuadriPhase Shift Keying) symbol and then mapped onto corresponding physical resources and sequence resources before being transmitted.

The LTE TDD system defines 7 kinds of configurations for the uplink and downlink sub frames. In most configurations for the sub frames, there is one-to-many relationship between the uplink sub frames and the downlink sub frames in many circumstances. That is, for any one of UEs of the system, one uplink sub frame needs to transmit response signals of a plurality of downlink sub frames corresponding to the uplink sub frame. A timing of transmission of ACK/NACK corresponding to certain configuration of uplink and downlink sub frames of the LTE FDD and TDD systems is illustrated in Fig. 2.

In the LTE TDD system, response signals corresponding to a plurality of downlink sub frame data are transmitted in one uplink sub frame by using a method called channel selection. The method includes the following steps:

1. bundling response signals of two TBs in case that the downlink sub frame includes the two TBs; and

2. determining modulated symbol value and corresponding physical resources and sequence resources according to the value of the bundled response signals by using a look-up table.

Table 1 illustrates a method of feeding back response signals of one uplink sub frames corresponding to two downlink sub frames. As illustrated in Table 1, if the response signal, which is detected from the two sub frames by the UE, is (ACK, ACK), uplink physical resources and sequence resources, onto which the index of the lowest CCE of the PDCCH for scheduling downlink signal transmission for UE is mapped, in the first sub frame, are selected, and the modulated symbol value is (1, 1). If response signals corresponding to the two sub frames are (ACK, NACK/DTX), the index n0 of the lowest CCE of the PDCCH of the 0^{th} sub frame is selected to map onto the uplink physical resources and sequence resources, and the modulated symbol value is (0, 1). Other channel selections are derived from Table 1.

**Table 1: channel selection method of response signals of 2 bits in LTE system**

| response 1, response 2 | resource | *b*(0)*, b*(1) |
|---|---|---|
| ACK, ACK | *n1* | 1, 1 |
| ACK, NACK/DTX | *n0* | 0, 1 |
| NACK/DTX, ACK | *n1* | 0, 0 |
| NACK/DTX, NACK | *n1* | 1, 0 |
| NACK, DTX | *n0* | 1, 0 |
| DTX, DTX | N/A | N/A |

In LTE-Advanced (also called LTE-A) system, the data is transmitted by using carrier aggregation, and a plurality of component carriers (CC) are included in the uplink and downlink. Uplink data transmission and downlink data transmission may be scheduled in each component carrier for the mobile stations in the system. The system configures/activates a primary component carrier (PCC) and a plurality of secondary component carriers (SCC) for each UE. The primary component carrier and secondary component carriers may schedule data transmission in their own component carrier respectively. The primary component carrier may also schedules the data transmission in the secondary component carriers, and this scheduling method is called scheduling across component carriers. In addition, for any one of the UEs of the system, the LTE-Advanced system has determined to feed back control information, such as response signals of each downlink component carrier data, channel state information of downlink component carrier and etc., corresponding to all downlink component carriers configured/activated by the system in the uplink primary component carrier. The system performs matching of the primary component carrier by signaling. If the numbers of the uplink component carriers are the same as that of the downlink component carriers in the system, the uplink component carriers and the downlink component carriers are matched one to one. If the number of the downlink component carriers is larger than that of the uplink component carriers, a plurality of downlink component carriers are matched with the same uplink component carrier. For any two UEs, if the downlink primary component carriers are the same, the uplink primary component carriers are also the same,

LTE-Advanced has decided to perform, for UE which supports response signals of 4 bits at most, feed back of the response signals by using channel selection. Unlike the case that the same configuration of uplink and downlink sub frame is adopted for all UEs in the LTE TDD system, the data may be transmitted by different mobile stations using different uplink and downlink component carriers in the LTE-Advanced system. In this case, there is a problem about how to perform feed back of the response signals with less overhead.

### SUMMARY OF THE INVENTION

Hereinafter, a brief summary of the present invention will be given, so as to provide basic understanding of some aspects of the present invention. It is to be understood that this summary is not an exhaustive summary about the present invention. It is not intended to determine the key or important part of the present invention, or to define the scope of the present invention. It only aims to give some concepts in a simplified form to serve as a preface to the more detailed description discussed later.

According to one aspect of the present disclosure, there is provided a method of transmitting an uplink response signal in a multi-component carrier communication system, in the multi-component carrier communication system, each uplink component carrier being associated with a group of downlink component carriers, the group of downlink component carriers being a part of all downlink component carriers of the multi-component carrier communication system. The method includes allocating, in a uplink primary component carrier, uplink control channel resources for each downlink component carrier associated with the uplink primary component carrier; selecting, from the allocated uplink control channel resources, an uplink control channel resource for transmitting the uplink response signal based on a response signal state, and selecting a modulation symbol mapping; and transmitting the uplink response signal by using the selected uplink control channel resource and modulation symbol mapping.

According to one aspect of the present disclosure, there is provided a mobile station. The mobile station is used with a multi-component carrier communication system. In the multi-component carrier communication system, each uplink component carrier is associated with a group of downlink component carriers. The group of downlink component carriers being a part of all downlink component carriers of the multi-component carrier communication system. The mobile station includes a resource allocation unit configured to allocate, in a uplink primary component carrier, uplink control channel resources for each downlink component carrier associated with the uplink primary component carrier; a selection unit configured to select, from the allocated uplink control channel resources, an uplink control channel resource for transmitting the uplink response signal based on a response signal state, and to select a modulation symbol mapping; and a transmission unit configured to transmit the uplink response signal by using the selected uplink control channel resource and modulation symbol mapping.

According to another aspect of the present disclosure, there is provided a multi-component carrier communication system, including a base station and the above described mobile station.

The present invention is focused on performing feedback for response signal with less overhead.

### BRIEF DESCRIPTION OF THE DRAWINGS

The above and other objects, features and advantages of the present invention will be more easily understood with reference to the following description of the embodiments of the present invention made in conjunction with the accompanying drawings. The components in the drawings are adopted only for illustrating the principle of the present invention. In some drawings, the same or similar technical features or components will be denoted by the same or similar reference numbers.

Fig. 1 is a schematic view of mapping between the uplink and downlink control channels in the LTE system;

Fig. 2 is a schematic view of timing of transmitting response signals in the LTE FDD system;

Fig. 3 is a schematic view of timing of transmitting response signals in the LTE FDD system;

Fig. 4 is a flowchart of a method of transmitting uplink response signals according to one embodiment of the present disclosure;

Fig. 5 is a schematic view of carrier configuration of system of an embodiment of the present disclosure;

Fig. 6 illustrates a mobile station according to an embodiment of the present disclosure;

Fig. 7 is a flowchart of a method of transmitting uplink response signals according to another embodiment of the present disclosure;

Fig. 8 illustrates a multi-carrier communication system according to a embodiment of the present disclosure; and

Fig. 9 illustrates a base station according to an embodiment of the present disclosure.

### DETAILED DESCRIPTION OF THE EMBODIMENTS

Hereinafter, the embodiments of the present invention will be described with reference to the accompanying drawings. Elements and features illustrated in one drawing or embodiment of the present invention may be combined with elements and features illustrated in one or more other drawings and embodiments. It should be noted that for the purpose of clarity, the indication and description of components and processing which are already known by those skilled in the art and irrelevant to the present invention are omitted in the drawings and description.

In a part of the following contents, the embodiments of the present disclosure are introduced by taking the LTE Advanced system of 3GPP as an example. However, it should be understood that the present invention is not limited to the LTE Advanced system, and may be apply to similar multi-carrier communication systems having component carrier aggregation function.

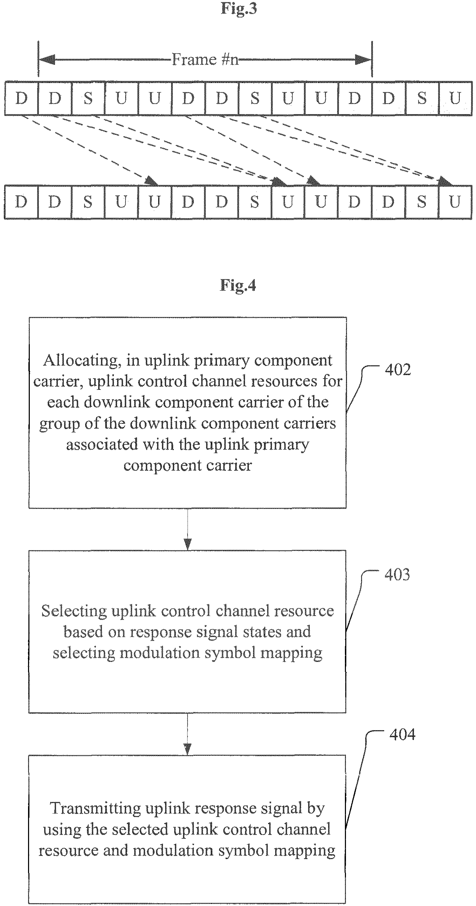

Fig. 4 is a flowchart of a method of transmitting uplink response signals according to an embodiment of the present disclosure. The method illustrated in Fig. 4 is applied to a multi-carrier communication system. In the multi-carrier communication system, each uplink component carrier is associated with a group of downlink component carriers. The group of downlink component carriers are a part of all downlink component carriers of the multi-component carrier communication system.

In step 402, in an uplink primary component carrier, uplink control channel resources for each downlink component carrier associated with the uplink primary component carrier are allocated.

In step 404, an uplink control channel resource for transmitting the uplink response signal is selected from the allocated uplink control channel resources based on a response signal state, and a modulation symbol mapping is selected.

In step 406, the uplink response signal is transmitted by using the selected uplink control channel resource and modulation symbol mapping.

In the present embodiments, it is not necessary to allocate the uplink control channel resources for all downlink component carriers in each uplink component carrier, and thus the uplink overhead of the system can be reduced.

In one example, the resources may be reserved in advance such that in an uplink CC, resources are allocated separately for each downlink CC associated with the uplink CC, and an initial position of a PUCCH corresponding to each downlink CC in the uplink CC are made different in a frequency domain. For example, a different parameter N¹, which is used for determining the initial position of the PUCCH corresponding to each downlink CC in the uplink CC in the frequency domain and may be configured by a higher level, may be configured for each downlink CC. That is to say, the PUCCHs corresponding to the downlink CCs in the uplink CC can be made different from each other by configuring a different parameter N¹ for each downlink CC. It can be implemented by those skilled in the art to set the parameter N¹ by configuration of a higher level, which will not be described in detail herein.

In one example, when a base station is scheduling data transmission for a mobile station (or UE), at first, the downlink PCC and uplink PCC allocated to the mobile station are determined, and then the data transmission is scheduled preferably on the downlink PCC, and the base station may further configure/activate other downlink CC of the group of downlink component carrier associated with the uplink PCC and schedule data transmission for the mobile station on the downlink CC. Alternatively, the downlink PCC may schedule the downlink CC across component carriers to transmit data for the UE. In addition, the base station may further configure/activate the downlink CCs other than the group of downlink component carriers associated with the uplink PCC, and transmit data for the UE in a manner of scheduling the other downlink CCs across component carriers by using downlink PCC.

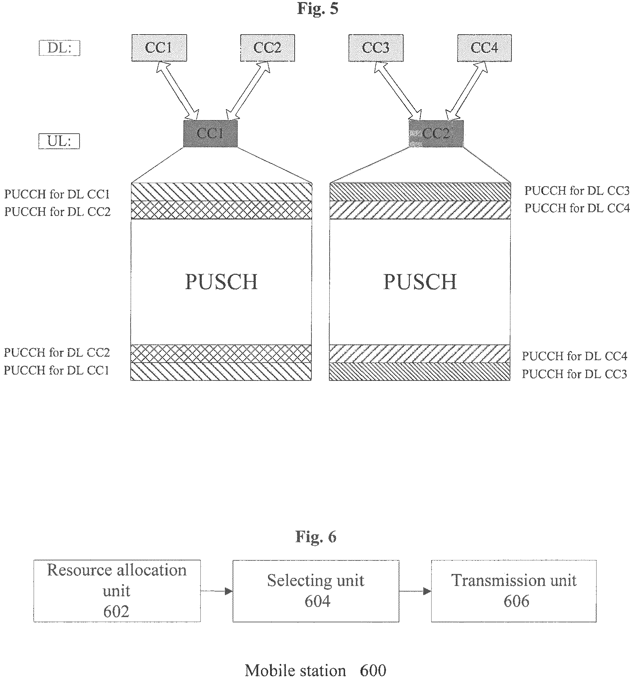

Fig. 5 is a schematic view of carrier configuration of system of an embodiment of the present disclosure. In Fig. 5, 4 downlink component carriers and 2 uplink component carriers are included in a system. For one UE of the system, the downlink PCC of the UE is DL CC1, and for another UE, the downlink PCC of the UE is DL CC2. DL CC1 and DL CC2 are determined to be matched (or associated) with an uplink CC1 when the system is initially configured, that is, the uplink PCCs of the two UE are both UL CC1. A group of downlink component carriers associated with UL CC1 include DL CC1 and DL CC2. UL CC1 allocates uplink control signaling resources to DL CC1 and DL CC2 respectively. A group of downlink component carriers associated with UL CC2 include DL CC3 and DL CC4. UL CC2 allocates uplink control signaling resources to DL CC3 and DL CC4 respectively.

An example of using the allocated uplink control channel resources to transmit the uplink response signals in various specific situations.

Situation 1: the base station configures/activates the downlink PCC for the mobile station

In this situation, BPSK (Binary Phase Shift Keying) modulation and QPSK modulation are adopted respectively depending on whether the data for the UE on the downlink PCC is one TB or two TBs, the response signals are transmitted in the uplink PUCCH resources allocated to the downlink PCC. In this situation, channel selection is not needed. In this situation, those skilled in the art can implement transmission of the response signals. The embodiments of the present disclosure mainly relate to the situations in which the base station configures/activates a plurality of CCs for the UE.

Situation 2: the base station configures/activates 2 CCs for the mobile station

In this situation, in addition to the PCC, the base station additionally allocates a CC for transmitting the data for the UE. At this time, the channel selection is needed and transmission of the response signals is performed on the selected resources by using QPSK modulation. There are two situations:

1) if the additionally allocated CC is not included in the group of downlink component carriers associated with the uplink PCC of the UE, the data transmission on the additionally allocated CC is scheduled across component carriers by the PCC;

2) if the additionally allocated CC is included in the group of downlink component carriers associated with the uplink PCC of the UE, the additionally allocated CC may schedule the data transmission by itself, or data transmission of the CC is scheduled across component carriers by PCC.

In addition, 9 states may be obtained according to the number of TBs transmitted on each CC for the UE, as shown in Table 2.

**Table 2: 9 states in case of two CCs**

| index | The number of TBs transmitted on PCC | The number of TBs transmitted on SCC |
|---|---|---|
| 1 | 0 | 0 |
| 2 | 1 | 0 |
| 3 | 1 | 1 |
| 4 | 2 | 0 |
| 5 | 2 | 1 |
| 6 | 2 | 2 |
| 7 | 1 | 2 |
| 8 | 0 | 1 |
| 9 | 0 | 2 |

For example, the first state in Table 2 represents that there is no data transmitted on both the PCC and SCC, the second state represents that there is 1 TB on the PCC and there is 0 TB on the SCC. According to the scheduling priorities of the PCC and SCC. The states in the table may be classified into three classes:

1) Class 1: the number of TBs on the PCC is larger than or equal to the number of TBs on the SCC, that is, the states 1-6 in the table;

2) Class 2: the number of TBs on the PCC is less than the number of TBs on the SCC, and there is 1 TB on the PCC, that is, the state 7 in the table;

3) Class 3: the number of TBs on the PCC is less than the number of TBs on the SCC, and there is 0 TB on the PCC, that is, the states 8-9 in the table. In the states of the class, no data transmission is scheduled on the PCC, and instead the data transmission is scheduled on the SCC.

In the channel selection of the LTE TDD system, response signals are transmitted on the selected resources by using QPSK, and the number of resources and the bit number of response signals which are necessary for performing channel selection are the same. For example, 4 resources are needed to be selectable, for ensuring transmission of the response signals of 4 bits at most. Since in LTE TDD system, UE bundles two response signals of sub frames containing 2 TBs before feeding back the response signals, there doesn't exist the situation in which the resources are not enough when performing channel selection. In contrast, for channel selection of carrier aggregation, the response signals are not bundled, the response signals of all corresponding TBs on each component carrier are needed to be fed back. Therefore, if the base station transmits two TBs for the mobile station on certain component carrier, only the resources onto which the index of the lowest CCE is mapped can be used as selectable resources among them. Thus, there exists the situation in which the resources are not enough when channel selection is performed. The solution for this includes:

1) if the base station allocates 2 TBs for certain UE on certain downlink CC, the index of the lowest CCE of PDCCH for scheduling the data transmission is one resource, and other resources are configured by a higher level;

2) if the base station allocates 2 TBs for certain UE on certain downlink CC, the PDCCH for scheduling the 2 TBs on the downlink CC includes at least two CCEs , and the resources onto which the two CCEs with the lowest index are mapped are two resources among them.

3) if the base station allocates 2 TBs for certain UE on certain downlink CC, the resource, onto which the lowest index is mapped, of the PDCCH for scheduling the data transmission on the downlink CC is one resource, another resource is the resource onto which the CCE index corresponding to the CCE index minus 1 is mapped.

Those skilled in the art may resolve the problem of resource being not enough by using other solutions, which will not be described in detail.

In the following example, the channel selection is designed to be apply to transmission of response signals of 1/2/3/4 bit or bits, and thus at least 4 CCE indexes are needed to be used as options. In the following description, the 4 CCE indexes are numbered as (n0, n1, n2, n3). For describing easily, the CCE indexes may also represent the resources onto which the indexes are mapped.

Table 3 illustrates an example 1 designed for channel selection when 2 downlink CCs (CC1 and CC2) are configured/activated for a mobile station, wherein CC1 is PCC, and CC2 is SCC. In the example, all of the three states as described above are included. In the table, A=ACK, N=NACK, D=DTX, X=absence of the TB, that is, there is no corresponding downlink data transmission block. SF1~4 represent the sub frames 1~4. State X is one newly introduced state of the response signals for the LTE A system.

**Table 3: example 1 of channel selection for 2 component carrier signals**

| | State of response signal of LTE A system | | | | Resource and symbol mapping | | State of response signal of LTE TDD system | | | |
|---|---|---|---|---|---|---|---|---|---|---|
| | CC1 | | CC2 | | | | SF1 | SF2 | SF3 | SF4 |
| No. | Response 1 | Response 2 | Response 3 | Response 4 | resources | Modulation symbol b(0),b(1) | Response 1 | Response 2 | Response 3 | Response 4 |
| 1 | A | A | A | A | n1 | 1, 1 | A | A | A | A |
| 2 | A | A | A | N/X | n1 | 1, 0 | A | A | A | N/D |
| 3 | A | A | N | A | n1 | 1, 0 | A | A | N/D | A |
| 4 | A | A | N/D | N/D/ X | n1 | 1, 0 | A | A | N/D | N/D |
| 5 | A | N/X | A | A | n3 | 0, 1 | A | N/D | A | A |
| 6 | A | N/X | A | N/X | n2 | 0, 1 | A | N/D | A | N/D |
| 7 | A | N/X | N | A | n0 | 0, 1 | A | N/D | N/D | A |
| 8 | A | N/X | N/D | N/D/ X | n0 | 1, 1 | A | N/D | N/D | N/D |
| 9 | N | A | A | A | n3 | 0, 1 | N/D | A | A | A |
| 10 | N | A | A | N/X | n2 | 1, 0 | N/D | A | A | N/D |
| 11 | N | A | N | A | n3 | 1, 0 | N/D | A | N/D | A |
| 12 | N | A | N/D | N/D/X | n1 | 0, 1 | N/D | A | N/D | N/D |
| 13 | N/D | N/D/X | A | A | n3 | 0, 1 | N/D | N/D | A | A |
| 14 | N/D | N/D/X | A | N/X | n2 | 0, 0 | N/D | N/D | A | N/D |
| 15 | N/D | N/D/X | N | A | n3 | 0, 0 | N/D | N/D | N | A |
| 16 | N/D | N/D/X | N | N/X | n2 | 1, 1 | N/D | N/D | N | D |
| 17 | D | D | D | D | N/A | N/ A | D | D | D | D |
| 18 | | | | | n3 | 1, 1 | N/D | N/D | N/D | N |
| 19 | N | N/X | D | D | n0 | 1, 0 | N | D | D | D |
| 20 | | | | | n1 | 0, 0 | N/D | N | D | D |

For comparing the states combination and resource selection in the present example with that in the case of LTE TDD system, in Table 3, the channel selection designed for LTE A system is placed on the left hand of the table, and the channel selection for the LTE TDD system is placed on the right hand of the table, and the combination of the response signals of the LTE A system is obtained by expanding the response signals of the LTE TDD system, that is, CCE with the same number is mapped on the physical resources and sequence resources in each line, and the same modulation symbols are used. If the first response signal state in Table 2 is (A, A, A, A), the LTE A system and LTE TDD system both use the resources onto which the index of the first available CCE is mapped, and the modulation symbol is (1, 1).

In addition, the first two response of the response signal states in the LTE A system in the example are the response corresponding to the data transmitted by CC1, the last two responses are the responses corresponding to the data transmitted by CC2.

An embodiment of the present disclosure is as follows. When 2 downlink CCs are configured/activated for the mobile station, the channel selection is designed to comply with the following design rules.

1) Since the first two responses of the response signal states are responses of TBs of corresponding CC1, taking this as an example, when one response for the same downlink CC is A or N, the PDCCH for scheduling the TBs is released successfully, and thus another response can not be D. The responses 3, 4 are similar with that. For the 5^{th} response signal state in the table, the response signal state in the corresponding LTE TDD system is (A, N/D, A, A), and is amended to (A, N/X, A, A).

In addition, one state in LTE TDD system is the 19^{th} response signal state (N, D, D, D). According to that rule, the 19^{th} response signal state does not exist in the LTE A system. The state in the LTE A system corresponding to the above 19^{th} response signal state is amended to the 19^{th} response signal state (N, N/X, D, D).

One state in the LTE TDD system is the 16^{th} response signal state (N/D, N/D, N, D). According to that rule, the 16^{th} response signal state does not exist in the LTE A system. The state in the LTE A system corresponding to the above 16^{th} response signal state is amended to the 16^{th} response signal state (N/D, N/D/X, N, N/X).

One response signal state in the LTE TDD system is the 20^{th} response signal state (N/D, N, D, D). According to that rule, the 20^{th} response signal state does not exist in the LTE A system. The state in the LTE A system corresponding to the above 20^{th} response signal state is amended to the 19^{th} response signal state (N, N/X, D, D).

One state in the LTE TDD system is (N/D, N/D, N/D, N) in the 18^{th} line. According to that rule, the state does not exist in the LTE A system. The state in the LTE A system corresponding to the above state is amended to the 16^{th} response signal state (N/D, N/D/X, N, N/X).

After the response signal states in the LTE TDD system are amended as described above, the total number of the response signal states in the LTE A system is 18.

2) Since it is possible to transmit 1 TB on the downlink CC, and it is possible to transmit 2 TBs on the downlink CC, similarly to the case that N and D may be represented jointly in the LTE TDD system, N and X of the second TB on the downlink CC may be represented jointly in the LTE A system. For the second response signal state in Table 3, the response signal state is (A, A, A, N/X), representing that two TBs are transmitted on the first CC, the number of TBs transmitted on the second CC may be 1 or 2, wherein if two TBs are transmitted, the response signal state is (A, A, A, N), and if one TB is transmitted, the response signal state is (A, A, A, X), and the TB on the second CC does not exist. The response state of the corresponding LTE TDD system is (A, A, A, N/D).

3) Since if the same CC corresponds to two TBs, there does not exist the case that the first TB is not transmitted and the second TB is transmitted, there does not exist (D, A), (D, N) of response signal states for response signals corresponding to certain CC. In the table, the 13^{th} response signal state is (N/D, N/D/X, A, A), including the response signal states of (N, N, A, A), (N, X, A, A), (D, D, A, A), not including (D, N, A, A) and etc..

4) When the above rules are satisfied, N, D, X may be represented jointly. If the 4^{th} response signal state is (A, A, N/D, N/D/X), the response signal states that may be represented by the 4^{th} response signal state includes the cases that the response state corresponding to two TBs transmitted by the first CC is (A, A), that no TB may be transmitted on the second CC and the response signal state is (D, D), that one TB is transmitted on the second CC and the response signal state is (N, X), that two TBs is transmitted on the second CC and the response signal state is (N, N). It should be noted that according to the first and the third design rules, two response signal states of (D, N) and (N, D) do not exist, and state of (D, X) is the same as the state of (D, D), representing that no data is detected by the mobile station. In addition, the response state in the LTE corresponding to the above response state is (A, A, N/D, N/D).

5) When all responses are D, similar to the LTE TDD system, UE does not transmit any signal, which is corresponding to the 17^{th} response signal state.

6) The first response state can not be X, that is, the response for the first transport block of downlink PCC can not be X.

In addition, as described above, the table also relates to the situations with small probability of occurrence as following for example.

1) There is one TB on PCC, and there are two TBs at most on SCC. If the response signal of TB on PCC is ACK, it corresponds to the 5^{th} to 8^{th} response signal states in the table, and if the response on PCC is NACK, it corresponds to the 13^{th} to 16^{th} response signal states in the table. If the 13^{th} response signal state in the table is (N/D, N/D/X, A, A) including response signal state (N, X, A, A), it represents the case that there is one TB on CC1 and there is two TBs on CC2.

2) There is 0 TB on PCC and there are two TBs at most on SCC. It corresponds to the 13^{th} to 16^{th} lines in the table. If the 13^{th} response signal state in the table is (N/D, N/D/X, A, A) including response signal state (D, D, A, A), it represents the case that there is 0 TB on CC1 and there are two TBs on CC2.

It should be noted that actual response signal states included in each state in the table for channel selection may be various, but since the base station already knows in advance which mobile station transmits data on which ones of the CCs and how many TBs are included in the data transmitted on each CC, the base station may adjust the response signal state in the table for channel selection according to the above rules.

Table 4 illustrates an example 2 designed for channel selection when 2 downlink CCs (CC1 and CC2) are configured/activated for the mobile station, wherein CC1 is PCC, and CC2 is SCC. Compared to the example 1, the example 2 reduces the number of mapping the same resources and modulation symbol onto different combination of response signal states. In Table 3 of the example 1, the LTE TDD system uses resources n1 and b(0), b(1)=(1, 0) to represent three states, that is, the 2^{nd}, 3^{rd}, 4^{th} response signal states, the first two of which are both ACK. That is, if UE transmits symbol (1, 0) on the resources onto which n1 is mapped, the base station can only determine the data of the first two sub frames are received correctly. In addition, the resources n3 and b(0), b(1) =(0, 1) are used to represent three response states, that is, the 5^{th}, 9^{th}, and 13^{th} response signal states, the last two of which are both ACK. That is, if UE transmits symbol (0, 1) on the resources onto which n3 is mapped, the base station can only determine the data of the last two sub frames are received correctly. Since the total number of response signal states of the LTE A system in the example is less than that of the LTE TDD system by two, the 2^{nd} response signal state in the example is amended to use resource n1 mapping, and transmission is performed by using symbol b(0), b(1) =(0,0), that is, the resources and modulation symbol of the 20^{th} response signal state in the example 1 are used. In addition, the 2^{nd} response signal state may be kept unchanged, and the 3^{rd} and 4^{th} response signal states are amended to transmit on the resource mapping and modulation symbol. The 5^{th} response signal state is amended by using resource n3 mapping, and transmission is performed to use symbol b(0),b(1) =(1,1), that is, the resources and modulation symbols of the 18^{th} response signal state in the example 1 are used. In addition, the 5^{th} response signal state may be kept unchanged and the 9^{th} and 13^{th} response signal states may be amended to transmit on the resource mapping and modulation symbol.

**Table 4: example 2 of channel selection method of 2 component carriers signal**

| | Response signal state | | | | Resource and symbol mapping | |
|---|---|---|---|---|---|---|
| No. | Response 1 | Response 2 | Response 3 | Response 4 | Resource | Modulation symbol b(0), b(1) |
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N/D | N/D/X | A | A | n3 | 0, 1 |
| 14 | N/D | N/D/X | A | N/X | n2 | 0, 0 |
| 15 | N/D | N/D/X | N | A | n3 | 0, 0 |
| 16 | N/D | N/D/X | N | N/X | n2 | 1, 1 |
| 17 | D | D | D | D | N/A | N/A |
| 18 | N | N/X | D | D | n0 | 1, 0 |

Table 5 illustrates an example 3 designed for channel selection when 2 downlink CCs (CC1 and CC2) are configured/activated for the mobile station, wherein CC1 is PCC, and CC2 is SCC. The table is based on the example 2. Compared to the example 2, the present example does not consider the states in the third class with the lowest priority, that is, the present example does not consider the states in which the responses for the primary component carrier are all D or X, and the responses for the secondary component carrier are not all D or X. The 13^{th} to 16^{th} response signal states in the present table need to be amended, wherein the response the response signal corresponding to the first TB is amended from N/D to N, the response corresponding to the second TB is amended from N/D/X to N/X.

**Table 5: example 3 of channel selection method of 2 component carrier signals**

| | Response signal state | | | | Resource and symbol mapping | |
|---|---|---|---|---|---|---|
| No. | Response 1 | Response 2 | Response 3 | Response 4 | Resource | Modulation symbol b(0), b(1) |
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N | N/X | A | A | n3 | 0, 1 |
| 14 | N | N/X | A | N/X | n2 | 0, 0 |
| 15 | N | N/X | N | A | n3 | 0, 0 |
| 16 | N | N/X | N | N/X | n2 | 1, 1 |
| 17 | D | D | D | D | N/A | N/A |
| 18 | N | N/X | D | D | n0 | 1, 0 |

Table 6 illustrates an example 4 designed for channel selection when 2 downlink CCs (CC1 and CC2) are configured/activated for the mobile station, wherein CC1 is PCC, and CC2 is SCC. One principle of the example is that when 2 CCs are configured/activated for the mobile station, but the data transmission is scheduled only on PCC, the selected resource is ensured to be n0, which is the index of the lowest CCE of the control signaling for scheduling the data transmission for the mobile station on the downlink PCC. The advantage is that there is no need to allocate additionally resource for the mobile station. On the basis of the table of example 3, the states in which the states of the response signal bits 3 and 4 are N/D/X, i.e., the 4^{th}, 8^{th}, 12^{th} and 18^{th} response signal states, are amended. If resource in the 4^{th} response signal state is amended from n1 to n0, the modulation symbol is amended from (1, 0) to (0, 0). The resource of the 12^{th} response signal state is amended from n1 to n0, the modulation symbol is unchanged. The resource of the 7^{th} response signal state is amended from n0 to n2 to ensure not to conflict with the resource in the 12^{th} response signal state. And other amendments are possible.

**Table 6: example 4 of channel selection method of 2 component carrier signals**

| | Response signal state | | | | Resource and symbol mapping | |
|---|---|---|---|---|---|---|
| No. | Response 1 | Response 2 | Response 3 | Response 4 | Resource | Modulation symbol b(0), b(1) |
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n0 | 0, 0 |
| 5 | A | N/X | A | A | n3 | 0, 1 |
| 6 | A | N/X | A | N/X | n2 | 0, 1 |
| 7 | A | N/X | N | A | n2 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n0 | 0, 1 |
| 13 | N | N/X | A | A | n3 | 0, 1 |
| 14 | N | N/X | A | N/X | n2 | 0, 0 |
| 15 | N | N/X | N | A | n3 | 0, 0 |
| 16 | N | N/X | N | N/X | n2 | 1, 1 |
| 17 | D | D | D | D | N/A | N/A |
| 18 | N | N/X | D | D | n0 | 1, 0 |

Situation 3: the base station configures/activates 3 CCs for the UE

In this situation, in addition to PCC, two CCs are additionally allocated for transmitting data for the UE, and then there are the following situations when the channel selection is performed.

1) The additionally allocated CCs are not in the group of downlink component carriers associated with the uplink PCC of the UE. Then the data transmission on the additionally allocated CC is performed across components carriers by PCC.

2) One of the additionally allocated CCs is in the group of downlink component carriers associated with the uplink PCC, and the other is not in the group of downlink component carriers associated with the uplink PCC, then the CC in the group may schedule the data transmission by itself, or the data transmission is scheduled on the CC across component carriers by PCC, and the data transmission is scheduled on the CC outside the group across component carriers by PCC.

3) The additionally allocated CCs are both in the group of downlink component carriers associated with the uplink PCC, then the additionally allocated CCs may schedule the data transmission by itself, or the data transmission may be scheduled on the CCs across component carriers by PCC.

In addition, 23 states may be obtained according to the number of TBs transmitted on each CC, as illustrated in Table 6. For example, the 1^{st} state represents that no data is transmitted on PCC and two SCCs, the 2^{nd} state represents that there is 1 TB on PCC, that there is 0 TB on SCC1 and SCC2 and etc.. According to the scheduling priorities of PCC and SCC, the states in the table may be classified into three classes.

1) Class 1: the number of TBs on PCC is larger than or equal to the number of TBs on SCC, and the indexes satisfying the states are 1-11.

2) Class 2: the number of TBs on PCC is less than the number of TBs on SCC, there is 1 TB on PCC, and the indexes satisfying the states are 12-15.

3) Class 3: the number of TBs on PCC is less than the number of TBs on SCC, there is 0 TB on PCC, and the indexes satisfying the states are 16-23. In the states, there is no data scheduled to be transmitted on PCC, and there is data scheduled to be transmitted on SCC.

**Table 7: 23 states in case of 3 CCs**

| Index | Number of TBs transmitted on PCC | Number of TBs transmitted on SCC1 | Number ofTBs transmitted on SCC2 |
|---|---|---|---|
| 1 | 0 | 0 | 0 |
| 2 | 1 | 0 | 0 |
| 3 | 1 | 0 | 1 |
| 4 | 1 | 1 | 0 |
| 5 | 1 | 1 | 1 |
| 6 | 2 | 0 | 0 |
| 7 | 2 | 0 | 1 |
| 8 | 2 | 1 | 0 |
| 9 | 2 | 1 | 1 |
| 10 | 2 | 2 | 0 |
| 11 | 2 | 0 | 2 |
| 12 | 1 | 2 | 0 |
| 13 | 1 | 0 | 2 |
| 14 | 1 | 1 | 2 |
| 15 | 1 | 2 | 1 |
| 16 | 0 | 1 | 0 |
| 17 | 0 | 0 | 1 |
| 18 | 0 | 1 | 1 |
| 19 | 0 | 2 | 0 |
| 20 | 0 | 0 | 2 |
| 21 | 0 | 2 | 1 |
| 22 | 0 | 1 | 2 |
| 23 | 0 | 2 | 2 |

Situation 4: the base station configures/activates 4 CCs for the UE

In this situation, in addition to PCC, 3 CCs are additionally allocated for transmitting data for the UE, the classification may be derived similarly according to situations 2 and 3.

The channel selection are the same for 3 CCs and 4 CCs. Taking 3 CCs as an example, Table 8 illustrates an example 1 designed for channel selection when 3 downlink CCs (CC1, CC2 and CC3) are configured/activated for the mobile station, wherein CC1 is PCC, and CC2 and CC3 is SCC. Although the base station configures/activates 3 CCs for the UE, the data is transmitted for the UE on only 1 CC or 2 CCs among them, the table of channel selection designed for 3 CCs must include the response signal states of all of the 2 CCs. In addition, for the UE, the combinations of 4 responses may be various, such as:

1) the 1^{st}, 2^{nd} response correspond to the responses of TB on corresponding CC1, that is, 2 TBs are transmitted on CC1; the 3^{rd}, 4^{th} responses correspond to the responses of TB on corresponding CC2 and CC3 respectively, that is, one TB is send on each of CC2 and CC3.

2) the 1^{st} response corresponds to the response of TB on corresponding CC1, that is, one TB is transmitted on CC1; the 2^{nd}, 3^{rd} responses correspond to the responses of TB on corresponding CC2, that is, 2 TBs are transmitted on CC2; the 4^{th} response corresponds to the responses ofTB on corresponding CC3, that is, 1 TB is transmitted on CC3.

Therefore, for the designed table, there is no limitation in which if the first response signal is A or N, the second response signal can not be D.

**Table 8: example 1 of channel selection method of 3/4 component carrier signals**

| | Response signal state in LTE A system | | | | Resource and symbol mapping | | Response signal state in LTE TDD system | | | |
|---|---|---|---|---|---|---|---|---|---|---|
| N o. | Response 1 | Response 2 | Response 3 | Response 4 | Resource | Modulation symbol b(0), b(1) | Response 1 | Response 2 | Response 3 | Response 4 |
| 1 | A | A | A | A | n1 | 1, 1 | A | A | A | A |
| 2 | A | A | A | N/D/X | n1 | 1, 0 | A | A | A | N/D |
| 3 | A | A | N/D/X | A | n1 | 1, 0 | A | A | N/D | A |
| 4 | A | A | N/D/X | N/D/X | n1 | 1, 0 | A | A | N/D | N/D |
| 5 | A | N/D/ X | A | A | n3 | 0, 1 | A | N/D | A | A |
| 6 | A | N/D/ X | A | N/D/X | n2 | 0, 1 | A | N/D | A | N/D |
| 7 | A | N/D/X | N/D/X | A | n0 | 0, 1 | A | N/D | N/D | A |
| 8 | A | N/D/ X | N/D/X | N/D/X | n0 | 1, 1 | A | N/D | N/D | N/D |
| 9 | N | A | A | A | n3 | 0, 1 | N/D | A | A | A |
| 10 | N | A | A | N/D/X | n2 | 1, 0 | N/D | A | A | N/D |
| 11 | N | A | N/D/X | A | n3 | 1, 0 | N/D | A | N/D | A |
| 12 | N | A | N/D/X | N/D/X | n1 | 0, 1 | N/D | A | N/D | N/D |
| 13 | N/D | N/D/ X | A | A | n3 | 0, 1 | N/D | N/D | A | A |
| 14 | N/D | N/D/ X | A | N/D/X | n2 | 0, 0 | N/D | N/D | A | N/D |
| 15 | N/D | N/D/ X | N/D/X | A | n3 | 0, 0 | N/D | N/D | N | A |
| 16 | N/D | N/D/ X | N | D | n2 | 1, 1 | N/D | N/D | N | D |
| 17 | N/D | N/D/ X | N/D/X | N/D/X | N/A | N/A | D | D | D | D |
| 18 | N/D | N/D/ X | N/D/X | N | n3 | 1, 1 | N/D | N/D | N/D | N |
| 19 | N | D | D | D | n0 | 1, 0 | N | D | D | D |
| 20 | N/D | N | D | D | n1 | 0, 0 | N/D | N | D | D |

As illustrated in Table 8, the table of channel selection designed for 3 component carriers includes 5 states, A, N, N/D/X, D, N/D. Each combination of the response signals includes a plurality of situations. For example, the first response signal state (A, A, A, A) includes the following states:

1) (A, A), (A, A), (D, D)

2) (A, A), (D, D), (A, A)

3) (A, X), (A, X), (A, A)

4) (A, X), (A, A), (A, X)

5) (A, X), (A, X), (A, A)

6) (D, D), (A, A),(A, A)

The first two responses represent the responses for transmitting data by CC1, the 3^{rd}, 4^{th} responses represent the responses for transmitting data by CC2, the 5^{th}, 6^{th} responses represent the response for transmitting data by CC3. Accordingly, the states 1) and 2) are the states in the Class 1 with the highest priority, and the states 3), 4), 5) are states in the Class 2, and the state 6) is a state in the Class 3.

The embodiments of the present disclosure are as follows, when the mobile station configures/activates 3 or 4 downlink CCs, the designed channel selection complies with the following design rules.

1) The first response can not be X, that is, the response to the first transport block of the downlink PCC can not be X.

2) If two neighboring responses are the responses to two transport blocks of the same downlink component carrier, the response signal states need to comply with the rules designed for 2 CCs. For example, if the first one of the two responses is A or N, the other can not be D.

Table 9 illustrates an example 2 designed for channel selection when 3 downlink CCs (CC1, CC2 and CC3) are configured/activated for the mobile station, wherein CC1 is PCC, and CC2 and CC3 is SCC. Compared to the example 1, the embodiment does not consider the states in the class 3 with the lowest priority. The 13^{th} to 18^{th} and 20^{th} states in the table need to be amended, and the response corresponding to the first TB is amended from N/D to N.

**Table 9: example 2 of channel selection method of 3/4 component carrier signals**

| | Response signal state | | | | Resource and symbol mapping | |
|---|---|---|---|---|---|---|
| No. | Response 1 | Response 2 | Response 3 | Response 4 | resource | Modulation symbol b(0),b(1) |
| 1 | A | A | A | A | n1 | 1, 1 |
| 2 | A | A | A | N/D/X | n1 | 1, 0 |
| 3 | A | A | N/D/X | A | n1 | 1, 0 |
| 4 | A | A | N/D/X | N/D/X | n1 | 1, 0 |
| 5 | A | N/D/X | A | A | n3 | 0, 1 |
| 6 | A | N/D/X | A | N/D/X | n2 | 0, 1 |
| 7 | A | N/D/X | N/D/X | A | n0 | 0, 1 |
| 8 | A | N/D/X | N/D/X | N/D/X | n0 | 1, 1 |
| 9 | N | A | A | A | n3 | 0, 1 |
| 10 | N | A | A | N/D/X | n2 | 1, 0 |
| 11 | N | A | N/D/X | A | n3 | 1, 0 |
| 12 | N | A | N/D/X | N/D/X | n1 | 0, 1 |
| 13 | N | N/D/X | A | A | n3 | 0, 1 |
| 14 | N | N/D/X | A | N/D/X | n2 | 0, 0 |
| 15 | N | N/D/X | N/D/X | A | n3 | 0, 0 |
| 16 | N | N/D/X | N | D | n2 | 1, 1 |
| 17 | N/D | N/D/X | N/D/X | N/D/X | N/A | N/A |
| 18 | N | N/D/X | N/D/X | N | n3 | 1, 1 |
| 19 | N | D | D | D | n0 | 1, 0 |
| 20 | N | N | D | D | n1 | 0, 0 |

Similar to the example 4 for 2 component carriers, similar amendments may also be made to 3/4 component carriers to ensure that when the data is transmitted only on PCC, the physical resources and sequence resources transmitted in response signal of resource n0 mapping are selected.

Those skilled in the art can understand that Tables 8 and 9 may also apply to the channel selection when 4 CCs are configured/activated for the mobile station.

Fig. 6 illustrates a mobile station 600 according to an embodiment of the present disclosure. The mobile station 600 is used for a multi-component carrier communication system. In the multi-component carrier communication system, each uplink component carrier is associated with a group of downlink component carriers. The group of downlink component carriers are a part of all downlink component carriers of the multi-component carrier communication system. The mobile station 600 includes a resource allocation unit 602, a selection unit 604 and a transmission unit 606. The resource allocation unit 602 is configured to allocate, in an uplink primary component carrier, uplink control channel resources for each downlink component carrier associated with the uplink primary component carrier. The resource allocation unit 602 may perform resource allocation according to the signaling received from the base station. The selection unit 604 is configured to select, from the allocated uplink control channel resources, an uplink control channel resource for transmitting the uplink response signal based on a response signal state. The transmission unit 606 is configured to transmit the uplink response signal by using the selected uplink control channel resource.

In one example, the resource allocation unit 602 makes an initial position of a PUCCH channel corresponding to each downlink component carrier associated with the uplink primary component carrier in the uplink primary component carrier different in a frequency domain.

In one example, if one response for one downlink component carrier in the response signal states is A or N, another response for the same downlink component carrier is not D, wherein A represents that the data is received correctly, N represents that the data is received in error, and D represents no downlink control data is received.

In one example, in case that responses for the second transport block of the same downlink component carrier of two response signal states are respectively N and X and other responses are the same, the selection unit 604 selects the same uplink control channel resource and modulation symbol mapping for transmitting the uplink response signal, wherein N represents the data is received in error, and X represents there is no corresponding downlink data transport block.

In one example, in the response signal state, response for a first transport block of one downlink component carrier cannot be X, wherein X represents that there is no corresponding downlink data transport block.

In one example, two responses for the same downlink component carrier cannot be respectively D and A, or D and N, wherein A represents that the data is received correctly, N represents that the data is received in error, and D represents that no downlink control data is received.

In one example, if only one downlink primary component carrier and one secondary component carrier are configured/activated, the response signal state is selected from the following:

| No. | Response 1 | Response 2 | Response 3 | Response 4 |
|---|---|---|---|---|
| 1 | A | A | A | A |
| 2 | A | A | A | N/X |
| 3 | A | A | N | A |
| 4 | A | A | N/D | N/D/X |
| 5 | A | N/X | A | A |
| 6 | A | N/X | A | N/X |
| 7 | A | N/X | N | A |
| 8 | A | N/X | N/D | N/D/X |
| 9 | N | A | A | A |
| 10 | N | A | A | N/X |
| 11 | N | A | N | A |
| 12 | N | A | N/D | N/D/X |
| 13 | N/D | N/D/X | A | A |
| 14 | N/D | N/D/X | A | N/X |
| 15 | N/D | N/D/X | N | A |
| 16 | N/D | N/D/X | N | N/X |
| 17 | D | D | D | D |
| 18 | N | N/X | D | D |

The response 1 and response 2 represent responses for a first transport block and a second transport block of the downlink primary component carrier, the response 3 and response 4 represent responses for a first transport block and a second transport block of the downlink secondary component carrier, A represents that the data is received correctly, N represents that the data is received in error, D represents that no downlink control data is received, and X represents there is no corresponding downlink data transport block.

In one example, the selection unit 604 selects, in case that only one downlink primary component carrier and one secondary component carrier are configured/activated, the uplink control channel resource for transmitting the uplink response signal and modulation symbol mapping based on the following:

| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 1, 0 |
| 3 | A | A | N | A | n1 | 1, 0 |
| 4 | A | A | N/D/X | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D/X | N/D/X | n0 | 1, 1 |
| 9 | N | A | A | A | n3 | 0, 1 |
| 10 | N | A | A | N/X | n2 | 1, 0 |
| 11 | N | A | N | A | n3 | 1, 0 |
| 12 | N | A | N/D/X | N/D/X | n1 | 0, 1 |
| 13 | N/D | N/D/X | A | A | n3 | 0, 1 |
| 14 | N/D | N/D/X | A | N/X | n2 | 0, 0 |
| 15 | N/D | N/D/X | N | A | n3 | 0, 0 |
| 16 | N/D | N/D/X | N | N/X | n2 | 1, 1 |
| 17 | D | D | D | D | N/A | N/A |
| 18 | N | N/X | D | D | n0 | 1, 0 |

The resources n0-n3 represent resources onto which indexes of control channel element are mapped, the modulation symbol b(0), b(1) represents a first bit and a second bit of the modulation symbol, and N/A represents not applicable.

In one example, wherein the selection unit 604 does not select the same uplink control channel resource and modulation symbol mapping for any three kinds of response signal states.

In one example, wherein the selection unit 604 selects, in case that only one downlink primary component carrier and one secondary component carrier are configured/activated, the uplink control channel resource for transmitting the uplink response signal, and selects modulation symbol mapping based on the following:

| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/D | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N/D | N/D/X | A | A | n3 | 0, 1 |
| 14 | N/D | N/D/X | A | N/X | n2 | 0, 0 |
| 15 | N/D | N/D/X | N | A | n3 | 0, 0 |
| 16 | N/D | N/D/X | N | N/X | n2 | 1, 1 |
| 17 | D | D | D | D | N/A | N/A |
| 18 | N | N/X | D | D | n0 | 1, 0 |

The resources n0∼n3 represent resources onto which indexes of control channel element are mapped, the modulation symbol b(0), b(1) represents a first bit and a second bit of the modulation symbol, and N/A represents not applicable.

In one example, the response signal state does not comprise a state that responses for the primary component carrier are all D or X and responses for the secondary component carrier are not all D or X, wherein D represents that no downlink control data is received, and X represents there is no corresponding downlink data transport block.

In one example, he selection unit 604 selects, in case that only one downlink primary component carrier and one secondary component carrier are configured/activated, the uplink control channel resource for transmitting the uplink response signal and modulation symbol mapping based on the following:

| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N | N/X | A | A | n3 | 0, 1 |
| 14 | N | N/X | A | N/X | n2 | 0, 0 |
| 15 | N | N/X | N | A | n3 | 0, 0 |
| 16 | N | N/X | N | N/X | n2 | 1, 1 |
| 17 | D | D | D | D | N/A | N/A |
| 18 | N | N/X | D | D | n0 | 1, 0 |

The response 1 and response 2 represent responses for a first transport block and a second transport block of the downlink primary component carrier, the response 3 and response 4 represent responses for a first transport block and a second transport block of the downlink secondary component carrier, A represents that the data is received correctly, N represents that the data is received in error, the resources n0∼n3 represent resources onto which indexes of control channel element are mapped, the modulation symbol b(0), b(1) represents a first bit and a second bit of the modulation symbol, and N/A represents not applicable.

In one example, in case that one downlink primary component carrier and one or more secondary component carriers are configured/activated and the data are only scheduled to be transmitted on the downlink primary component carrier, the selection unit 604 selects the resources, onto which the lowest index n0 in a control signaling for scheduling data transmission of the mobile station 600 on the downlink primary component carrier are mapped, as the uplink control channel resource for transmitting the uplink response signal.

In one example, in case that one downlink primary component carrier and one secondary component carriers are configured/activated and the data are only scheduled to be transmitted on the downlink primary component carrier, the selection unit 604 selects the uplink control channel resource for transmitting the uplink response signal and modulation symbol mapping based on the following:

| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n0 | 0, 0 |
| 5 | A | N/X | A | A | n3 | 0, 1 |
| 6 | A | N/X | A | N/X | n2 | 0, 1 |
| 7 | A | N/X | N | A | n2 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n0 | 0, 1 |
| 13 | N | N/X | A | A | n3 | 0, 1 |
| 14 | N | N/X | A | N/X | n2 | 0, 0 |
| 15 | N | N/X | N | A | n3 | 0, 0 |
| 16 | N | N/X | N | N/X | n2 | 1, 1 |
| 17 | D | D | D | D | N/A | N/A |
| 18 | N | N/X | D | D | n0 | 1, 0 |

The response 1 and response 2 represent responses for a first transport block and a second transport block of the downlink primary component carrier, the response 3 and response 4 represent responses for a first transport block and a second transport block of the downlink secondary component carrier, A represents that the data is received correctly, N represents that the data is received in error, D represents that no downlink control data is received, X represents there is no corresponding downlink data transport block, the resources n0∼n3 represent resources onto which indexes of control channel element are mapped, and the modulation symbol b(0), b(1) represents a first bit and a second bit of the modulation symbol, and N/A represents not applicable.

In one example, in case that one downlink primary component carrier and two or three secondary component carriers are configured/activated, the selection unit 604 selects the uplink control channel resource for transmitting the uplink response signal and modulation symbol mapping based on the following:

| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/D/X | n1 | 1, 0 |
| 3 | A | A | N/D/X | A | n1 | 1, 0 |
| 4 | A | A | N/D/X | N/D/X | n1 | 1, 0 |
| 5 | A | N/D/X | A | A | n3 | 0, 1 |
| 6 | A | N/D/X | A | N/D/X | n2 | 0, 1 |
| 7 | A | N/D/X | N/D/X | A | n0 | 0, 1 |
| 8 | A | N/D/X | N/D/X | N/D/X | n0 | 1, 1 |
| 9 | N | A | A | A | n3 | 0, 1 |
| 10 | N | A | A | N/D/X | n2 | 1, 0 |
| 11 | N | A | N/D/X | A | n3 | 1, 0 |
| 12 | N | A | N/D/X | N/D/X | n1 | 0, 1 |
| 13 | N/D | N/D/X | A | A | n3 | 0, 1 |
| 14 | N/D | N/D/X | A | N/D/X | n2 | 0, 0 |
| 15 | N/D | N/D/X | N/D/X | A | n3 | 0, 0 |
| 16 | N/D | N/D/X | N | D | n2 | 1, 1 |
| 17 | N/D | N/D/X | N/D/X | N/D/X | N/A | N/A |
| 18 | N/D | N/D/X | N/D/X | N | n3 | 1, 1 |
| 19 | N | D | D | D | n0 | 1, 0 |
| 20 | N/D | N | D | D | n1 | 0, 0 |

The response 1, response 2, response 3 and response 4 represent responses for transport blocks of different downlink component carriers, A represents that the data is received correctly, N represents that the data is received in error, D represents that no downlink control data is received, X represents there is no corresponding downlink data transport block, the resources n0∼n3 represent resources onto which indexes of control channel element are mapped, the modulation symbol b(0), b(1) represents a first bit and a second bit of the modulation symbol, and N/A represents not applicable.

In one example, in case that only one downlink primary component carrier and two or three secondary component carriers are configured/activated, wherein the selection unit selects the uplink control channel resource for transmitting the uplink response signal and modulation symbol mapping based on the following:

| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/D/X | n1 | 1, 0 |
| 3 | A | A | N/D/X | A | n1 | 1, 0 |
| 4 | A | A | N/D/X | N/D/X | n1 | 1, 0 |
| 5 | A | N/D/X | A | A | n3 | 0, 1 |
| 6 | A | N/D/X | A | N/D/X | n2 | 0, 1 |
| 7 | A | N/D/X | N/D/X | A | n0 | 0, 1 |
| 8 | A | N/D/X | N/D/X | N/D/X | n0 | 1, 1 |
| 9 | N | A | A | A | n3 | 0, 1 |
| 10 | N | A | A | N/D/X | n2 | 1, 0 |
| 11 | N | A | N/D/X | A | n3 | 1, 0 |
| 12 | N | A | N/D/X | N/D/X | n1 | 0, 1 |
| 13 | N | N/D/X | A | A | n3 | 0, 1 |
| 14 | N | N/D/X | A | N/D/X | n2 | 0, 0 |
| 15 | N | N/D/X | N/D/X | A | n3 | 0, 0 |
| 16 | N | N/D/X | N | D | n2 | 1, 1 |
| 17 | N/D | N/D/X | N/D/X | N/D/X | N/A | N/A |
| 18 | N | N/D/X | N/D/X | N | n3 | 1, 1 |
| 19 | N | D | D | D | n0 | 1, 0 |
| 20 | N | N | D | D | n1 | 0, 0 |

The response 1, response 2, response 3 and response 4 represent responses for transport blocks of different downlink component carriers, A represents that the data is received correctly, N represents that the data is received in error, the resources n0∼n3 represent resources onto which indexes of control channel element are mapped, the modulation symbol b(0), b(1) represents a first bit and a second bit of the modulation symbol, and N/A represents not applicable.

The specific details in relation to respective units in Fig. 6 may refer to the description of the method for transmitting uplink response signal made in conjunction Figs. 4-5, and will not be described herein.

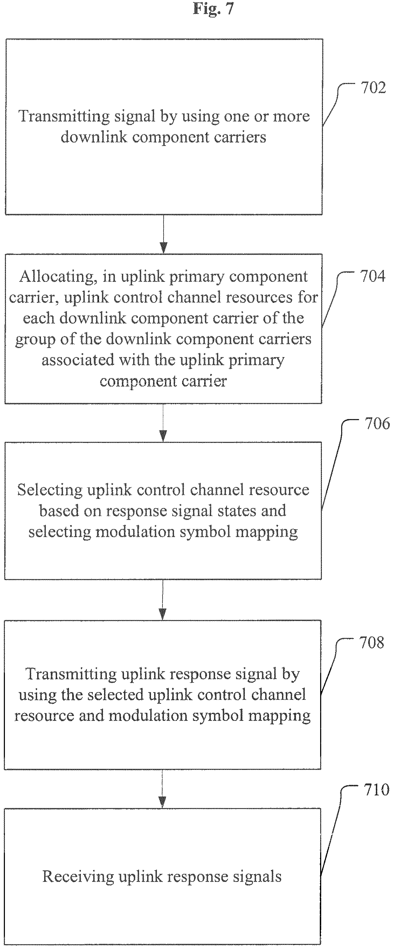

Fig. 7 is a flowchart of a method of transmitting uplink response signals according to another embodiment of the present disclosure. The method illustrated in Fig. 7 is applied to a multi-component carrier communication system. In the multi-carrier communication system, each uplink component carrier is associated with a group of downlink component carriers. The group of downlink component carriers are a part of all downlink component carriers of the multi-component carrier communication system.

In step 702, signals are transmitted by using one or more downlink component carriers. The signals may be transmitted from the base station to the mobile station.

In step 704, uplink control channel resources for each downlink component carrier associated with the uplink primary component carrier are allocated in an uplink primary component carrier.

In step 706, an uplink control channel resource for transmitting the uplink response signal based on a response signal state is selected from the allocated uplink control channel resources, and a modulation symbol mapping is selected.

In step 708, the uplink response signal is transmitted by using the selected uplink control channel resources and modulation symbol mapping.

In step 710, the uplink response signal is received.

The steps 704, 706 and 708 are similar to the steps 402, 404 and 406 in Fig. 4 respectively, and will not be described herein.

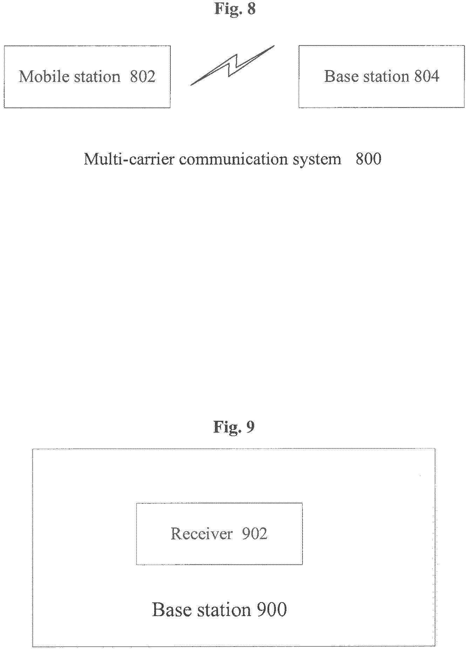

Fig. 8 illustrates a multi-carrier communication system 800 according to a embodiment of the present disclosure. The multi-carrier communication system 800 includes a mobile station 802 and a base station 804. The mobile station 802 may the mobile station as illustrated in Fig. 6, and will not be described herein.

Fig. 9 illustrates a base station 900 according to an embodiment of the present disclosure. The base station 900 includes a receiver 902. The receiver 902 may be configured to receive the uplink response signal transmitted by the mobile station using the selected uplink control channel resource and modulation symbol mapping.

Some embodiments of the present invention have been described in detail as above. As can be understood by those skilled in the art, all or any of steps or components of the methods and apparatus of the present invention may be implemented as hardware, firmware, software or combination thereof in any computing apparatus including processors, storage medium and etc., or networks of computing apparatus, and can be implemented by those skilled in the art by using their basis programming skills after understanding the content of the present invention, and thus will not be described in detail.

In addition, it is apparent that when possible external operations are involved in the above description, any display apparatus and any input apparatus connected with any computing apparatus and corresponding interfaces and control program will be certainly involved. In a summary, relevant hardware, software in a computer or computer system, and hardware, firmware, software or combination thereof for implementing various operations of the above methods of the present invention will constitute the apparatus of the present invention and constituting components thereof.

Therefore, the objects of the present invention may also be achieved by running a program or a group of programs on any information processing apparatus. The information processing apparatus may be a common general purpose apparatus. Therefore, the object of the present invention may also achieved by providing a program product embodying program code for implementing said method or apparatus. That is, such program product will consttitute the present invention, and medium for transporting or storing such program product may also construct the present invention. Obviously, said storage or transport medium may be any type of storage or transport medium known by those skilled in the art, or developed in the future, and thus it is unnecessary to exemplify various storage or transport medium herein.

In the apparatus and method of the present invention, apparently, various components or steps may be decomposed, combined and/or combined after being decomposed. The decomposing and or combination should be considered as equivalent solution of the present invention. It should also be pointed out, the steps for performing the above series of processing may naturally performed chronologically in an order described herein, but they are unnecessarily to be performed chronologically. Some steps may be performed in parallel or independently from each other. Meanwhile, in the description of the specific embodiments of the present invention, the features described and/or illustrated for embodiments may be used in one or more other embodiments in the same or similar way, combined with the features of other embodiments, or substitute the features of other embodiments.

It should be emphasized that the term "comprise/include" refers the presence of features, elements, steps or components, but does not exclude the presence of one or more other features, elements, steps or components.

Although the present invention and its advantageous have been described in detail, it should be understood that various modification, substitution and change may be made without departing from the spirit and scope defined by the appended claims of the present invention. Moreover, the scope of the present application is not limited to the specific embodiments of the procedure, apparatus, means, method and steps described in the present specification. Those skilled in the art will understand, from the disclosure of the present invention, the procedure, apparatus, means, method or steps existing or to be developed in the future, which perform the basically same functions as the corresponding embodiment described herein or obtain the basically same results as the corresponding embodiment, may be used in the present invention. Therefore, the appended claims intend to cover such procedure, apparatus, means, method and steps in the scope thereof.

## Claims

1. A method of transmitting an uplink response signal in a multi-component carrier communication system, in the multi-component carrier communication system, each uplink component carrier being associated with a group of downlink component carriers, the group of downlink component carriers being a part of all downlink component carriers of the multi-component carrier communication system, the method comprising:
allocating, in an uplink primary component carrier, uplink control channel resources for each downlink component carrier associated with the uplink primary component carrier;
selecting, from the allocated uplink control channel resources, an uplink control channel resource for transmitting the uplink response signal based on a response signal state, and selecting a modulation symbol mapping; and
transmitting the uplink response signal by using the selected uplink control channel resource and modulation symbol mapping.

2. The method of claim 1, the step of allocating uplink control channel resources comprising making an initial position of a PUCCH channel corresponding to each downlink component carrier associated with the uplink primary component carrier in the uplink primary component carrier different in a frequency domain.

3. The method of claim 1 or 2, if one response for one downlink component carrier in the response signal state is A or N, another response for the same downlink component carrier is not D, wherein A represents that the data is received correctly, N represents that the data is received in error, and D represents no downlink control data is received.

4. The method of claim 1 or 2, the step of selecting an uplink control channel resource for transmitting the uplink response signal and selecting a modulation symbol mapping comprises:
in case that responses of two response signal states for the second transport block of the same downlink component carrier are respectively N and X and other responses are the same, the same uplink control channel resource and modulation symbol mapping are selected to transmit the uplink response signal, wherein N represents that the data is received in error, and X represents there is no corresponding downlink data transport block.

5. The method of claim 1 or 2, in the response signal state, response for a first transport block of one downlink component carrier cannot be X, X representing there is no corresponding downlink data transport block.

6. The method of claim 1 or 2, wherein two responses for the same downlink component carrier cannot be respectively D and A, or D and N, wherein A represents that the data is received correctly, N represents that the data is received in error, and D represents that no downlink control data is received.

7. The method of claim 1 or 2, wherein if only one downlink primary component carrier and one secondary component carrier are configured/activated, the response signal state is selected from the following:
| No. | Response 1 | Response 2 | Response 3 | Response 4 |
|---|---|---|---|---|
| 1 | A | A | A | A |
| 2 | A | A | A | N/X |
| 3 | A | A | N | A |
| 4 | A | A | N/D | N/D/X |
| 5 | A | N/X | A | A |
| 6 | A | N/X | A | N/X |
| 7 | A | N/X | N | A |
| 8 | A | N/X | N/D | N/D/X |
| 9 | N | A | A | A |
| 10 | N | A | A | N/X |
| 11 | N | A | N | A |
| 12 | N | A | N/D | N/D/X |
| 13 | N/D | N/D/X | A | A |
| 14 | N/D | N/D/X | A | N/X |
| 15 | N/D | N/D/X | N | A |
| 16 | N/D | N/D/X | N | N/X |
| 17 | D | D | D | D |
| 19 | N | N/X | D | D |
wherein the response 1 and response 2 represent responses for a first transport block and a second transport block of the downlink primary component carrier, the response 3 and response 4 represent responses for a first transport block and a second transport block of the downlink secondary component carrier, A represents that the data is received correctly, N represents that the data is received in error, D represents that no downlink control data is received, and X represents there is no corresponding downlink data transport block.

8. The method of claim 7, wherein the step of selecting an uplink control channel resource for transmitting the uplink response signal and selecting modulation symbol mapping comprises:
if only one downlink primary component carrier and one secondary component carrier are configured/activated, the uplink control channel resource for transmitting the uplink response signal and the modulation symbol mapping are selected based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 0 | A | A | A | N/X | n1 | 1, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D | N/D/X | n0 | 1, 1 |
| 9 | N | A | A | A | n3 | 0, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N/D | N/D/X | A | A | n3 | 0, 1 |
| 14 | N/D | N/D/X | A | N/X | n2 | 0, 0 |
| 15 | N/D | N/D/X | N | A | n3 | 0, 0 |
| 16 | N/D | N/D/X | N | N/X | n2 | 1, 1 |
| 17 | D | D | D | D | N/A | N/A |
| 18 | N | N/X | D | D | n0 | 1, 0 |
wherein the resources n0∼n3 represent resources onto which indexes of control channel element are mapped, the modulation symbol b(0), b(1) represents the first bit and the second bit of the modulation symbol, and N/A represents not applicable

9. The method of claim 7, wherein the step of selecting an uplink control channel resource for transmitting the uplink response signal and selecting modulation symbol mapping comprises:
for any three kinds of response signal states, not selecting the same uplink control channel resource and modulation symbol mapping.

10. The method of claim 9, wherein the step of selecting an uplink control channel resource for transmitting the uplink response signal and selecting modulation symbol mapping comprises:
if only one downlink primary component carrier and one secondary component carrier are configured/activated, the uplink control channel resource for transmitting the uplink response signal and the modulation symbol mapping are selected based on the following:
| No. | Response1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N/D | N/D/X | A | A | n3 | 0, 1 |
| 14 | N/D | N/D/X | A | N/X | n2 | 0, 0 |
| 15 | N/D | N/D/X | N | A | n3 | 0, 0 |
| 16 | N/D | N/D/X | N | N/X | n2 | 1, 1 |
| 17 | D | D | D | D | N/A | N/A |
| 18 | N | N/X | D | D | n0 | 1, 0 |
wherein the resources n0∼n3 represent resources onto which indexes of control channel element are mapped, modulation symbol b(0), b(1) represents a first bit and a second bit of the modulation symbol, and N/A represents not applicable

11. The method of claim 1 or 2, wherein the response signal state does not comprise a state that responses for the primary component carrier are all D or X and responses for the secondary component carrier are not all D or X, wherein D represents that no downlink control data is received, and X represents there is no corresponding downlink data transport block.

12. The method of claim 11, wherein the step of selecting an uplink control channel resource for transmitting the uplink response signal and selecting modulation symbol mapping comprises:
if only one downlink primary component carrier and one secondary component carrier are configured/activated, configuration/activation of the uplink control channel resource for transmitting the uplink response signal and the modulation symbol mapping are selected based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N | N/X | A | A | n3 | 0, 1 |
| 14 | N | N/X | A | N/X | n2 | 0, 0 |
| 15 | N | N/X | N | A | n3 | 0, 0 |
| 16 | N | N/X | N | N/X | n2 | 1, 1 |
| 17 | D | D | D | D | N/A | N/A |
| 18 | N | N/X | D | D | n0 | 1, 0 |
wherein the response 1 and response 2 represent responses for a first transport block and a second transport block of the downlink primary component carrier, the response 3 and response 4 represent responses for a first transport block and a second transport block of the downlink secondary component carrier, A represents that the data is received correctly, N represents that the data is received in error, the resources n0∼n3 represent resources onto which indexes of control channel element are mapped, the modulation symbol b(0), b(1) represents a first bit and a second bit of the modulation symbol, and N/A represents not applicable.

13. The method of claim 1 or 2, wherein the step of selecting an uplink control channel resource for transmitting the uplink response signal and selecting modulation symbol mapping comprises:
in case that the data are only scheduled to be transmitted on the downlink primary component carrier, selecting resources, onto which the lowest index n0 of control channel element in a control signaling on the downlink primary component carrier for scheduling data transmission, are mapped as the uplink control channel resource for transmitting the uplink response signal.

14. The method of claim 13, wherein the step of selecting an uplink control channel resource for transmitting the uplink response signal and selecting modulation symbol mapping comprises:
in case that one downlink primary component carrier and one secondary component carrier are configured/activated and the data are only scheduled to be transmitted on the downlink primary component carrier, selecting the uplink control channel resource for transmitting the uplink response signal and modulation symbol mapping based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n0 | 0, 0 |
| 5 | A | N/X | A | A | n3 | 0, 1 |
| 6 | A | N/X | A | N/X | n2 | 0, 1 |
| 7 | A | N/X | N | A | n2 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n0 | 0, 1 |
| 13 | N | N/X | A | A | n3 | 0, 1 |
| 14 | N | N/X | A | N/X | n2 | 0, 0 |
| 15 | N | N/X | N | A | n3 | 0, 0 |
| 16 | N | N/X | N | N/X | n2 | 1, 1 |
| 17 | D | D | D | D | N/A | N/A |
| 18 | N | N/X | D | D | n0 | 1, 0 |
wherein the response 1 and response 2 represent responses for a first transport block and a second transport block of the downlink primary component carrier, the response 3 and response 4 represent responses for a first transport block and a second transport block of the downlink secondary component carrier, A represents that the data is received correctly, N represents that the data is received in error, D represents that no downlink control data is received, X represents there is no corresponding downlink data transport block, the resources n0∼n3 represent resources onto which indexes of control channel element are mapped, the modulation symbol b(0), b(1) represents a first bit and a second bit of the modulation symbol, and N/A represents not applicable.

15. The method of claim 1 or 2, wherein the step of selecting an uplink control channel resource for transmitting the uplink response signal and selecting modulation symbol mapping comprises:
if only one downlink primary component carrier and two or three secondary component carriers are configured/activated, selecting the uplink control channel resource for transmitting the uplink response signal and modulation symbol mapping based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/D/X | n1 | 1, 0 |
| 3 | A | A | N/D/X | A | n1 | 1, 0 |
| 4 | A | A | N/D/X | N/D/X | n1 | 1, 0 |
| 5 | A | N/D/X | A | A | n3 | 0, 1 |
| 6 | A | N/D/X | A | N/D/X | n2 | 0, 1 |
| 7 | A | N/D/X | N/D/X | A | n0 | 0, 1 |
| 8 | A | N/D/X | N/D/X | N/D/X | n0 | 1, 1 |
| 9 | N | A | A | A | n3 | 0, 1 |
| 10 | N | A | A | N/D/X | n2 | 1, 0 |
| 11 | N | A | N/D/X | A | n3 | 1, 0 |
| 12 | N | A | N/D/X | N/D/X | n1 | 0, 1 |
| 13 | N/D | N/D/X | A | A | n3 | 0, 1 |
| 14 | N/D | N/D/X | A | N/D/X | n2 | 0, 0 |
| 15 | N/D | N/D/X | N/D/X | A | n3 | 0, 0 |
| 16 | N/D | N/D/X | N | D | n2 | 1, 1 |
| 17 | N/D | N/D/X | N/D/X | N/D/X | N/A | N/A |
| 18 | N/D | N/D/X | N/D/X | N | n3 | 1, 1 |
| 19 | N | D | D | D | n0 | 1, 0 |
| 20 | N/D | N | D | D | n1 | 0, 0 |
wherein the response 1, response 2, response 3 and response 4 represent responses for transport blocks of different downlink component carriers, A represents that the data is received correctly, N represents that the data is received in error, D represents that no downlink control data is received, X represents there is no corresponding downlink data transport block, the resources n0∼n3 represent resources onto which indexes of control channel element are mapped, the modulation symbol b(0), b(1) represents a first bit and a second bit of the modulation symbol, and N/A represents not applicable.

16. The method of claim 11, wherein the step of selecting an uplink control channel resource for transmitting the uplink response signal and selecting modulation symbol mapping comprises:
if only one downlink primary component carrier and two or three secondary component carriers are configured/activated, the uplink control channel resource for transmitting the uplink response signal and modulation symbol mapping are selected based on the following:
| No. | Response 1 | Response 2 | Response 3 | Response 4 | Resource | Modulation symbol b(0), b(1) |
|---|---|---|---|---|---|---|
| 1 | A | A | A | A | n1 | 1, 1 |
| 2 | A | A | A | N/D/X | n1 | 1, 0 |
| 3 | A | A | N/D/X | A | n1 | 1, 0 |
| 4 | A | A | N/D/X | N/D/X | n1 | 1, 0 |
| 5 | A | N/D/X | A | A | n3 | 0, 1 |
| 6 | A | N/D/X | A | N/D/X | n2 | 0, 1 |
| 7 | A | N/D/X | N/D/X | A | n0 | 0, 1 |
| 8 | A | N/D/X | N/D/X | N/D/X | n0 | 1, 1 |
| 9 | N | A | A | A | n3 | 0, 1 |
| 10 | N | A | A | N/D/X | n2 | 1, 0 |
| 11 | N | A | N/D/X | A | n3 | 1, 0 |
| 12 | N | A | N/D/X | N/D/X | n1 | 0, 1 |
| 13 | N | N/D/X | A | A | n3 | 0, 1 |
| 14 | N | N/D/X | A | N/D/X | n2 | 0, 0 |
| 15 | N | N/D/X | N/D/X | A | n3 | 0, 0 |
| 16 | N | N/D/X | N | D | n2 | 1, 1 |
| 17 | N/D | N/D/X | N/D/X | N/D/X | N/A | N/A |
| 18 | N | N/D/X | N/D/X | N | n3 | 1, 1 |
| 19 | N | D | D | D | n0 | 1, 0 |
| 20 | N | N | D | D | n1 | 0, 0 |
wherein the response 1, response 2 represent responses for transport blocks of one of two downlink component carriers, response 3 and response 4 represent responses for transport blocks of another of the two downlink component carriers, A represents that the data is received correctly, N represents that the data is received in error, the resources n0∼n3 represent resources onto which indexes of control channel element are mapped, the modulation symbol b(0), b(1) represents a first bit and a second bit of the modulation symbol, and N/A represents not applicable.

17. The method of claim 1 or 2, further comprising:
transmitting a signal by using one or a plurality of downlink component carriers; and
receiving the uplink response signal.

18. A mobile station for a multi-component carrier communication system, in the multi-component carrier communication system, each uplink component carrier being associated with a group of downlink component carriers, the group of downlink component carriers being a part of all downlink component carriers of the multi-component carrier communication system, the mobile station comprising:
a resource allocation unit configured to allocate, in a uplink primary component carrier, uplink control channel resources for each downlink component carrier associated with the uplink primary component carrier;
a selection unit configured to select, from the allocated uplink control channel resources, an uplink control channel resource for transmitting the uplink response signal based on a response signal state, and to select a modulation symbol mapping; and
a transmission unit configured to transmit the uplink response signal by using the selected uplink control channel resource and modulation symbol mapping.

19. The mobile station of claim 18, the resource allocation unit makes an initial position of a PUCCH channel corresponding to each downlink component carrier associated with the uplink primary component carrier in the uplink primary component carrier different in a frequency domain.

20. The mobile station of claim 18 or 19, if one response for one downlink component carrier in the response signal state is A or N, another response for the same downlink component carrier is not D, wherein A represents that the data is received correctly, N represents that the data is received in error, and D represents no downlink control data is received.

21. The mobile station of claim 18 or 19, in case that responses of two response signal states for the second transport block of the same downlink component carrier are respectively N and X and other responses are the same, the selection unit selects the same uplink control channel resource and modulation symbol mapping for transmitting the uplink response signal, wherein N represents the data is received in error, and X represents there is no corresponding downlink data transport block.

22. The mobile station of claim 18 or 19, in the response signal state, response for a first transport block of one downlink component carrier cannot be X, X representing there is no corresponding downlink data transport block.

23. The mobile station of claim 18 or 19, wherein two responses for the same downlink component carrier cannot be respectively D and A, or D and N, wherein A represents that the data is received correctly, N represents that the data is received in error, and D represents that no downlink control data is received.

24. The mobile station of claim 18 or 19, wherein if only one downlink primary component carrier and one secondary component carrier are configured/activated, the response signal state is selected from the following:
| No. | Response 1 | Response 2 | Response 3 | Response 4 |
|---|---|---|---|---|
| 1 | A | A | A | A |
| 2 | A | A | A | N/X |
| 3 | A | A | N | A |
| 4 | A | A | N/D | N/D/X |
| 5 | A | N/X | A | A |
| 6 | A | N/X | A | N/X |
| 7 | A | N/X | N | A |
| 8 | A | N/X | N/D | N/D/X |
| 9 | N | A | A | A |
| 10 | N | A | A | N/X |
| 11 | N | A | N | A |
| 12 | N | A | N/D | N/D/X |
| 13 | N/D | N/D/X | A | A |
| 14 | N/D | N/D/X | A | N/X |
| 15 | N/D | N/D/X | N | A |
| 16 | N/D | N/D/X | N | N/X |
| 17 | D | D | D | D |
| 18 | N | N/X | D | D |
wherein the response 1 and response 2 represent responses for a first transport block and a second transport block of the downlink primary component carrier, the response 3 and response 4 represent responses for a first transport block and a second transport block of the downlink secondary component carrier, A represents that the data is received correctly, N represents that the data is received in error, D represents that no downlink control data is received, and X represents there is no corresponding downlink data transport block.

25. The mobile station of claim 24, wherein the selection unit selects, in case that only one downlink primary component carrier and one secondary component carrier are configured/activated, the uplink control channel resource for transmitting the uplink response signal and modulation symbol mapping based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 1, 0 |
| 3 | A | A | N | A | n1 | 1, 0 |
| 4 | A | A | N/D/X | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D/X | N/D/X | n0 | 1, 1 |
| 9 | N | A | A | A | n3 | 0, 1 |
| 10 | N | A | A | N/X | n2 | 1, 0 |
| 11 | N | A | N | A | n3 | 1, 0 |
| 12 | N | A | N/D/X | N/D/X | n1 | 0, 1 |
| 13 | N/D | N/D/X | A | A | n3 | 0, 1 |
| 14 | N/D | N/D/X | A | N/X | n2 | 0, 0 |
| 15 | N/D | N/D/X | N | A | n3 | 0, 0 |
| 16 | N/D | N/D/X | N | N/X | n2 | 1, 1 |
| 17 | D | D | D | D | N/A | N/A |
| 18 | N | N/X | D | D | n0 | 1, 0 |
wherein the resources n0∼n3 represent resources onto which indexes of control channel element are mapped, the modulation symbol b(0), b(1) represents a first bit and a second bit of the modulation symbol, and N/A represents not applicable.

26. The mobile station of claim 24, wherein the selection unit does not select the same uplink control channel resource and modulation symbol mapping for any three kinds of response signal states.

27. The mobile station of claim 26, wherein the selection unit selects, in case that only one downlink primary component carrier and one secondary component carrier are configured/activated, the uplink control channel resource for transmitting the uplink response signal, and selects modulation symbol mapping based on the following:
| No. | Response 1 | Response 2 | Response 3 | Response 4 | Resource | I Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N/D | N/D/X | A | A | n3 | 0, 1 |
| 14 | N/D | N/D/X | A | N/X | n2 | 0, 0 |
| 15 | N/D | N/D/X | N | A | n3 | 0, 0 |
| 16 | N/D | N/D/X | N | N/X | n2 | 1, 1 |
| 17 | D | D | D | D | N/A | N/A |
| 18 | N | N/X | D | D | n0 | 1, 0 |
wherein the resources n0∼n3 represent resources onto which indexes of control channel element are mapped, the modulation symbol b(0), b(1) represents a first bit and a second bit of the modulation symbol, and N/A represents not applicable.

28. The mobile station of claim 18 or 19, wherein the response signal state does not comprise a state that responses for the primary component carrier are all D or X and responses for the secondary component carrier are not all D or X, wherein D represents that no downlink control data is received, and X represents there is no corresponding downlink data transport block.

29. The mobile station of claim 28, wherein the selection unit selects, in case that only one downlink primary component carrier and one secondary component carrier are configured/activated, the uplink control channel resource for transmitting the uplink response signal and modulation symbol mapping based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n1 | 1, 0 |
| 5 | A | N/X | A | A | n3 | 0, 1 |
| 6 | A | N/X | A | N/X | n2 | 0, 1 |
| 7 | A | N/X | N | A | n0 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n1 | 0, 1 |
| 13 | N | N/X | A | A | n3 | 0, 1 |
| 14 | N | N/X | A | N/X | n2 | 0, 0 |
| 15 | N | N/X | N | A | n3 | 0, 0 |
| 16 | N | N/X | N | N/X | n2 | 1, 1 |
| 17 | D | D | D | D | N/A | N/A |
| 18 | N | N/X | D | D | n0 | 1, 0 |
wherein the response 1 and response 2 represent responses for a first transport block and a second transport block of the downlink primary component carrier, the response 3 and response 4 represent responses for a first transport block and a second transport block of the downlink secondary component carrier, A represents that the data is received correctly, N represents that the data is received in error, the resources n0∼n3 represent resources onto which indexes of control channel element are mapped, the modulation symbol b(0), b(1) represents a first bit and a second bit of the modulation symbol, and N/A represents not applicable.

30. The mobile station of claim 18 or 19, wherein the selection unit selects, in case that one downlink primary component carrier and one or more secondary component carriers are configured/activated and the data are only scheduled to be transmitted on the downlink primary component carrier, the resources, onto which the lowest index n0 in a control signaling on the downlink primary component carrier for scheduling data transmission, are mapped, as the uplink control channel resource for transmitting the uplink response signal.

31. The mobile station of claim 30, wherein the selection unit selects, in case that one downlink primary component carrier and one secondary component carriers are configured/activated and the data are only scheduled to be transmitted on the downlink primary component carrier, the uplink control channel resource for transmitting the uplink response signal and modulation symbol mapping based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/X | n1 | 0, 0 |
| 3 | A | A | N | A | n1 | 1, 0 |
| 4 | A | A | N/D | N/D/X | n0 | 0, 0 |
| 5 | A | N/X | A | A | n3 | 0, 1 |
| 6 | A | N/X | A | N/X | n2 | 0, 1 |
| 7 | A | N/X | N | A | n2 | 0, 1 |
| 8 | A | N/X | N/D | N/D/X | n0 | 1, 1 |
| 9 | N | A | A | A | n3 | 1, 1 |
| 10 | N | A | A | N/X | n2 | 1, 0 |
| 11 | N | A | N | A | n3 | 1, 0 |
| 12 | N | A | N/D | N/D/X | n0 | 0, 1 |
| 13 | N | N/X | A | A | n3 | 0, 1 |
| 14 | N | N/X | A | N/X | n2 | 0, 0 |
| 15 | N | N/X | N | A | n3 | 0, 0 |
| 16 | N | N/X | N | N/X | n2 | 1, 1 |
| 17 | D | D | D | D | N/A | N/A |
| 18 | N | N/X | D | D | n0 | 1, 0 |
wherein the response 1 and response 2 represent responses for a first transport block and a second transport block of the downlink primary component carrier, response 3 and response 4 represent responses for a first transport block and a second transport block of the downlink secondary component carrier, A represents that the data is received correctly, N represents that the data is received in error, D represents that no downlink control data is received, X represents there is no corresponding downlink data transport block, the resources n0∼n3 represent resources onto which indexes of control channel element are mapped, the modulation symbol b(0), b(1) represents a first bit and a second bit of the modulation symbol, and N/A represents not applicable.

32. The mobile station of claim 18 or 19, wherein the selection unit selects, in case that one downlink primary component carrier and two or three secondary component carriers are configured/activated, uplink control channel resource for transmitting the uplink response signal and modulation symbol mapping based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/D/X | n1 | 1, 0 |
| 3 | A | A | N/D/X | A | n1 | 1, 0 |
| 4 | A | A | N/D/X | N/D/X | n1 | 1, 0 |
| 5 | A | N/D/X | A | A | n3 | 0, 1 |
| 6 | A | N/D/X | A | N/D/X | n2 | 0, 1 |
| 7 | A | N/D/X | N/D/X | A | n0 | 0, 1 |
| 8 | A | N/D/X | N/D/X | N/D/X | n0 | 1, 1 |
| 9 | N | A | A | A | n3 | 0, 1 |
| 10 | N | A | A | N/D/X | n2 | 1, 0 |
| 11 | N | A | N/D/X | A | n3 | 1, 0 |
| 12 | N | A | N/D/X | N/D/X | n1 | 0, 1 |
| 13 | N/D | N/D/X | A | A | n3 | 0, 1 |
| 14 | N/D | N/D/X | A | N/D/X | n2 | 0, 0 |
| 15 | N/D | N/D/X | N/D/X | A | n3 | 0, 0 |
| 16 | N/D | N/D/X | N | D | n2 | 1, 1 |
| 17 | N/D | N/D/X | N/D/X | N/D/X | N/A | N/A |
| 18 | N/D | N/D/X | N/D/X | N | n3 | 1, 1 |
| 19 | N | D | D | D | n0 | 1, 0 |
| 20 | N/D | N | D | D | n1 | 0, 0 |
wherein the response 1, response 2, response 3 and response 4 represent responses for transport blocks of different downlink component carriers, A represents that the data is received correctly, N represents that the data is received in error, D represents that no downlink control data is received, X represents there is no corresponding downlink data transport block, the resources n0∼n3 represent resources onto which indexes of control channel element are mapped, the modulation symbol b(0), b(1) represents a first bit and a second bit of the modulation symbol, and N/A represents not applicable.

33. The mobile station of claim 28, wherein the selection unit selects, in case that only one downlink primary component carrier and two or three secondary component carriers are configured/activated, the uplink control channel resource for transmitting the uplink response signal and modulation symbol mapping based on the following:
| No. | Response 1 | Response 2 | Response 3 | Response 4 | Resource | Modulation Symbol b(0), b(1) |
|---|---|---|---|---|---|---|
| 1 | A | A | A | A | n1 | 1, 1 |
| 2 | A | A | A | N/D/X | n1 | 1, 0 |
| 3 | A | A | N/D/X | A | n1 | 1, 0 |
| 4 | A | A | N/D/X | N/D/X | n1 | 1, 0 |
| 5 | A | N/D/X | A | A | n3 | 0, 1 |
| 6 | A | N/D/X | A | N/D/X | n2 | 0, 1 |
| 7 | A | N/D/X | N/D/X | A | n0 | 0, 1 |
| 8 | A | N/D/X | N/D/X | N/D/X | n0 | 1, 1 |
| 9 | N | A | A | A | n3 | 0, 1 |
| 10 | N | A | A | N/D/X | n2 | 1, 0 |
| 11 | N | A | N/D/X | A | n3 | 1, 0 |
| 12 | N | A | N/D/X | N/D/X | n1 | 0, 1 |
| 13 | N | N/D/X | A | A | n3 | 0, 1 |
| 14 | N | N/D/X | A | N/D/X | n2 | 0, 0 |
| 15 | N | N/D/X | N/D/X | A | n3 | 0, 0 |
| 16 | N | N/D/X | N | D | n2 | 1, 1 |
| 17 | N/D | N/D/X | N/D/X | N/D/X | N/A | N/A |
| 18 | N | N/D/X | N/D/X | N | n3 | 1, 1 |
| 19 | N | D | D | D | n0 | 1, 0 |
| 20 | N | N | D | D | n1 | 0, 0 |
wherein the response 1, response 2, response 3 and response 4 represent responses for transport blocks of different downlink component carriers, A represents that the data is received correctly, N represents that the data is received in error, the resources n0∼n3 represent resources onto which indexes of control channel element are mapped, the modulation symbol b(0), b(1) represents a first bit and a second bit of the modulation symbol, and N/A represents not applicable.

34. A multi-component carrier communication system, comprising a base station and the mobile station according to any one of claims 18-33.

35. The multi-component carrier communication system of claim 34, wherein the base station comprises a receiver configured to receive the uplink response signal transmitted by using the selected uplink control channel resource and modulation symbol mapping.
